# EUROPEAN PATENT APPLICATION

(11) **EP 4 565 008 A2**
(43) Date of publication of application: **04.06.2025**
(21) Application number: 24216583.5
(22) Date of filing: 29.11.2024
(51) Int. Cl.: H05B 45/10, H01B 7/00, H01R 13/66, H01R 13/717, H05B 45/20, H05B 47/155, H05B 47/175

(54) **TRANSMISSION LINE DEVICE, LUMINOUS TRANSMISSION LINE SYSTEM AND LIGHT CONTROL SIGNAL EXTENDING INTERFACE**

(30) Priority: 01.12.2023 TW 112213190 U
(71) Applicant: Elka International Ltd, 221424 New Taipei City (TW)
(72) Inventor: TING, Yuan-Hsi, 221424 New Taipei City (TW); CHENG, Yi-Chieh, 221424 New Taipei City (TW); CHEN, Yen-Tung, 221424 New Taipei City (TW); HO, Hsin-Han, 221424 New Taipei City (TW); HE, Ping, 221424 New Taipei City (TW)
(74) Representative: DTS Patent- und Rechtsanwälte PartmbB

(57) **Abstract**

The present invention provides a transmission line device. The transmission line device includes a connector, and a transmission cable connected to the connector with the first end of the transmission cable. The connector consists of a first connection interface and a circuit board coupled to the first connection interface. The transmission cable includes an electric transmission part connected to the first connection interface through the circuit board and configured to transmit at least one electrical signal from the first connection interface to a second end of the transmission cable and a light-emitting part coupled to the circuit board and having at least one light-emitting element; wherein the light-emitting part receives, from the circuit board, a light control signal configured to control the at least one light-emitting element.

## Description

### FIELD OF THE INVENTION

The present invention relates to a transmission line device, a luminous transmission line system, and a light control signal extending interface; in particular to, the present invention relates a transmission line device, a luminous transmission line system with a transmission cable having a light-emitting part, and a light control signal extending interface for the transmission line device and the luminous transmission line system.

### BACKGROUND OF THE INVENTION

In the current field of transmission, people not only pursue the quality of transmission signals but also hope that transmission line devices can provide aesthetic effects. For example, an exposed transmission line device can serve as an element for an interior design or an industrial product design of an electrical product (e.g., a gaming PC) to emphasize a specific theme for an aesthetic effect. Therefore, the appearance of the transmission line device is designed with various colors or shapes to highlight the specific theme for the aesthetic impact. For aesthetic effect applications, the transmission line device with a lighting effect will provide better visual effects than a non-lighting transmission line device. Accordingly, the transmission line device with a lighting effect will become mainstream in the field.

However, there are many restrictions for setting the lighting effect on the transmission line device. For example, setting light-emitting elements at a connector of the transmission line device will enlarge the connector of the transmission line device, resulting in excessive volume at the connector of the transmission line device and causing inconvenience during installation. Although there are prior arts that use light guide strips to guide the light from the connector of the transmission line device to the transmission cable, this approach still encounters problems such as uneven light intensity on the transmission cable (especially for a long transmission cable) or a single type of light. Also, the light guide strip approach still limits the volume of the connector of the transmission line device and causes inconvenience during installation of the transmission line device.

On the other hand, for a transmission line device coupled to an electrical device such as a computer, the transmission line device cannot be linked to the status of the computer. The transmission line device cannot dynamically switch or display the status of the computer. Furthermore, suppose the illumination of the transmission line device needs to be integrated with the status of the computer. In that case, the transmission line device must be connected to the pins or ports on the mainboard or other components inside the computer. However, there are no solutions for providing an interface for integrating the transmission line device with the computer.

Accordingly, many problems need to be overcome and solved in the technology of a luminescent transmission line device.

### SUMMARY OF THE INVENTION

Therefore, the present invention provides a transmission line device, a luminous transmission line system, and a light control signal extending the interface to solve the problems encountered by previous technologies effectively.

One of the objects of the present invention is to provide a transmission line device that can provide uniform and diverse luminous effects. The volume of the transmission line connector will not significantly increase due to the luminous effect, reducing the difficulty of installing the transmission line device.

One of the objects of the present invention is to provide a luminous transmission line system that can integrate transmission line devices with an electrical device. By delivering light control signals from the electrical device, the luminous transmission line system can enrich the luminous pattern.

The present invention aims to provide a light control signal-extending interface for integrating the transmission line device with an electrical device case.

The present invention provides a transmission line device. The transmission line device includes a connector, and a transmission cable connected to the connector at the first end of the transmission cable. The connector consists of a first connection interface and a circuit board coupled to the first connection interface. The transmission cable consists of an electric transmission part connected to the first connection interface through the circuit board and configured to transmit at least one electrical signal from the first connection interface to a second end of the transmission cable and a light-emitting part coupled to the circuit board and having at least one light-emitting element; wherein the light-emitting part receives, from the circuit board, a light control signal configured to control the at least one light-emitting element.

In an embodiment, the connector further includes a light control interface coupled to the circuit board, wherein the light control signal is provided to the light-emitting part from the light control interface through the circuit board.

In an embodiment, the light control interface is connected to a main part of the connector through an extending cable.

In an embodiment, the light control interface is configured to connect an electrical device and provide the light control signal, wherein the light control signal corresponds to the electrical device's status information.

In an embodiment, the first connection interface is configured to connect to the electrical device and receive at least one electrical signal, wherein the status information includes a status for the electrical device transmitting at least one electrical signal.

In an embodiment, the light control interface is selected from the USB or ARGB interface.

In an embodiment, the light control signal is configured to control a luminescence spectrum, a luminescence frequency, a brightness, or a combination thereof of the light-emitting part.

The first connection interface is selected from HDMI, DP, or USB.

The present invention provides a luminous transmission line system. The luminous transmission line system includes an electrical device and a transmission cable detachably connected to the electrical device. The electrical device includes a second connection interface configured to provide at least one electrical signal and a light control signal source configured to provide a light control signal. The transmission line device includes a connector, and a transmission cable connected to the connector at the first end of the cable. The connector consists of a first connection interface coupled to the second connection interface, a light control interface connected to the light control signal source, and a circuit board connected to the first connection interface and the light control interface. The transmission cable includes an electric transmission part connected to the first connection interface through the circuit board and configured to transmit at least one electrical signal from the first connection interface to a second end of the transmission cable and a light-emitting part coupled to the circuit board and having at least one light-emitting element; wherein the light-emitting part receives, from the circuit board, a light control signal configured to control the at least one light-emitting element.

In an embodiment, the light control interface is connected to a main part of the connector through an extending cable.

In an embodiment, the light control signal corresponds to the status information of the electrical device.

In an embodiment, the status information includes a status for the electrical device transmitting at least one electrical signal.

the light control interface is selected from the USB interface or ARGB interface in an embodiment.

In an embodiment, the light control signal is configured to control a luminescence spectrum, a luminescence frequency, a brightness, or a combination thereof of the light-emitting part.
the first connection interface is selected from HDMI, DP, or USB.

In an embodiment, the electrical device further includes a light control output interface arranged on a case of the electrical device and coupled to the light control signal source.

In an embodiment, the light control signal source is selected from the electrical device's mainboard, display board, or power supply.

The present invention provides a light control that extends the signal-extending interface. The light control signal extending interface includes a light control output interface and a light control signal transmission line coupled between the light control output interface and a light control signal source. The light control signal provided by the light control signal source is provided to the light control output interface through the light control signal transmission line, wherein the light control output interface is arranged at a case configured to accommodate the light control signal source.

In an embodiment, the light control output interface is integrated with a blanking plate and arranged at the case through the blanking plate.

In an embodiment, the blanking plate has an arranging opening corresponding to the light control output interface.

Through the above light-emitting part and the light-emitting element within the light-emitting part, the emission position of the transmission cable can be set with less limitation. Due to the arrangement of the light-emitting component of the transmission cable, the brightness or uniformity of the light-emitting will not be affected by the length of the transmission cable. The light-emitting element of the present invention provides different emission effects and/or colors by selecting the emission band of the light-emitting element. In addition, because the light-emitting element component is located at the transmission cable, the connector of the transmission line device will not have to be enlarged to accommodate the light-emitting element and/or the light guide strip. Therefore, the transmission line device of the present invention effectively reduces the volume and inconvenience of installing the connector.

On the other hand, the luminous transmission line system of the present invention effectively integrates with the electrical device and the transmission line device. Moreover, the light control signal provided by the electrical device is transmitted to the - light-emitting part through the light control interface of the transmission line device. The light control signal is configured to control the light-emitting element. It causes the light-emitting part of the transmission line device to provide various luminescent states.

Through the present invention's light control signal extending interface, the light control signal source arranged inside the case of the electrical device will be extended to the case. The light control signal extending interface arranged on the case provides convenience for insertion/removal of the light control interface of the transmission line device. Therefore, the present invention of a light control signal extending interface reduces the difficulties of extending the light control signal from the light control signal source. In addition, the light control signal extending interface integrated with the case of the electrical device prevents the incompleteness of the case while extending the light control signal. Accordingly, the light control signal extending interface will not affect the dustproof or waterproof of the case of the electrical device.

### BRIEF DESCRIPTION OF THE DRAWINGS

The accompanying drawings are presented to aid in the description of various aspects of the disclosure and are provided solely for illustration. To simplify the drawings and highlight the contents to be presented, the well-known structures or elements in the drawings may be drawn in a simple schematic manner or presented in an omitted manner. For example, the number of elements may be singular or plural. These drawings are provided only to explain these aspects and not to limit them.
FIG. 1 is a schematic diagram of the transmission line device according to an embodiment of the present invention.
FIG. 2 is a schematic diagram of the circuit signal connection of the transmission line device according to an embodiment of the present invention.
FIG. 3 is a schematic diagram of the circuit signal connection with a light control interface of the transmission line device according to an embodiment of the present invention.
FIG. 4 is a schematic diagram of the light control signal received from the first connection interface according to an embodiment of the present invention.
FIGs. 5A and 5B are schematic diagrams of the transmission line device's transparent and opaque sections according to an embodiment of the present invention.
FIG. 6 is a schematic diagram of the luminous transmission line system and the light control signal extending interface according to an embodiment of the present invention.
FIG. 7 is a block diagram of the circuit signal connection of the luminous transmission line system according to an embodiment of the present invention.

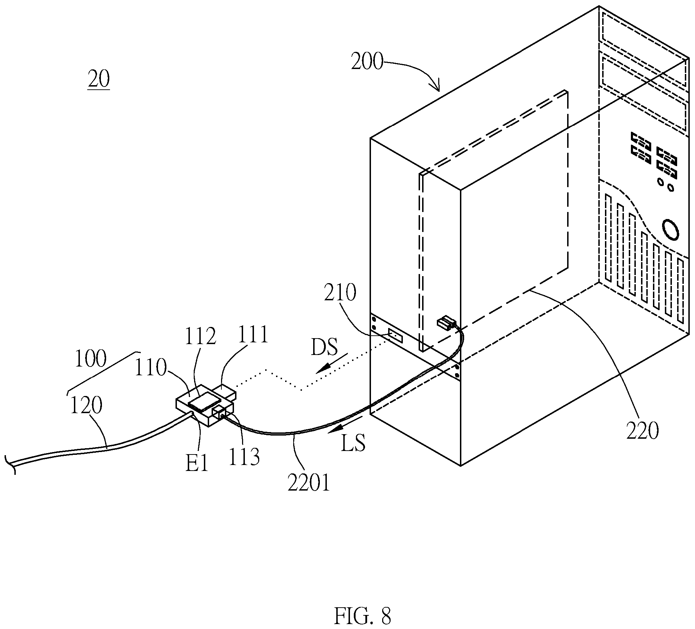

FIG. 8 is a schematic diagram of the luminous transmission line system and the light control signal extending interface according to an embodiment of the present invention.

### DETAILED DESCRIPTION OF THE PREFERRED EMBODIMENTS

Even though terms such as "first," second," and "third" may be used to describe an element, a part, a region, a layer, and/or a portion in the present specification, these elements, parts, regions, layers and/or portions are not limited by such terms. Such terms differentiate an element, a part, a region, a layer, and/or a portion from another element, part, region, layer, and/or portion. Therefore, in the following discussions, a first element, portion, region, or portion may be called a second element, portion, region, layer, or portion, and do not depart from the teaching of the present disclosure. The terms "comprise," "include," or "have" used in the present specification are open-ended terms and mean to "include," but not limited to

As used herein, the term "coupled to" in the various tenses of the verb "couple" may mean that element A is directly connected to element B or that other elements may be connected between elements A and B (i.e., that element A is indirectly cconnected with element B).

The terms "approximate" or "essentially" used in the present specification include the value itself and the average values within the acceptable range of deviation of the specific values confirmed by a person having ordinary skill in the current art, considering the specific measurement discussed and the number of errors related to such measurement (that is, the limitation of the measurement system). For example, "about" may mean within one or more standard deviations of the value itself or ±30%, ±20%, ±10%, ±5%. In addition, "about," "approximate," or "essentially" used in the present specification may select a more acceptable range of deviation or standard deviation based on optical property, etching property, or other properties. One cannot apply one standard deviation to all properties.

The first embodiment of the present invention provides a transmission line device. The transmission line device includes a connector and a transmission cable. The connector consists of a first connection interface and a circuit board coupled to the first connection interface. The first end of the transmission cable is connected to the connector. The transmission cable includes an electric transmission part and a light-emitting part. The electric transmission part is coupled to the first connection interface through the circuit board and configured to transmit at least one electrical signal from the first connection interface to the second end of the transmission cable. The light-emitting part is coupled to the circuit board and has at least one light-emitting element. Wherein the light-emitting part receives, from the circuit board, a light control signal configured to control at least one light-emitting element. At least one light-emitting element of the light-emitting part arranged on the transmission cable will provide a luminous effect. Compared to a conventional configuration, such as a light guide strip, at least one light-emitting element will provide various luminous effects. Besides, because the light-emitting part is arranged on the transmission cable, the provided by the light-emitting part of the present invention is more uniform than the conventional configuration and will not be limited by the length of the transmission cable. Furthermore, the size of the connector will not be enlarged to accommodate the light-emitting element.

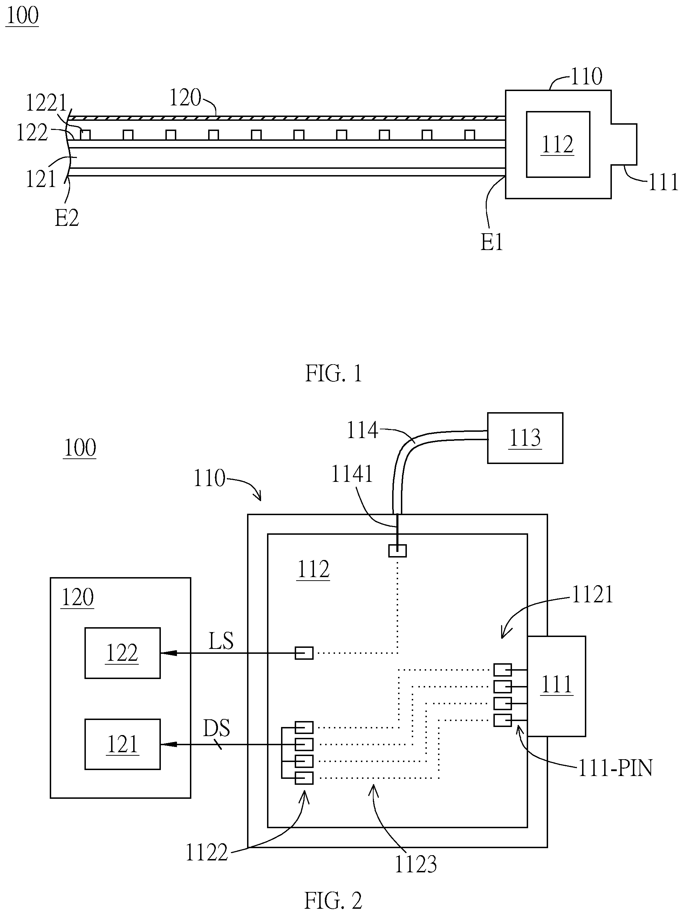

FIG. 1 and FIG. 2 illustrate the transmission line device 100, which includes the connector 110 and the transmission cable 120. The connector 110 consists of the first connection interface 111 and the circuit board 112 coupled to the first connection interface 111. The first end (E1) of the transmission cable 120 is connected to the connector 110. The transmission cable 120 includes the electric transmission part 121 and the light-emitting part 122. The electric transmission part 121 is coupled to the first connection interface 111 through the circuit board 112 and configured to transmit at least one electrical signal (i.e., the data signal (DS)) from the first connection interface 111 to the second end (E2) of the transmission cable 120. The light-emitting part 122 is coupled to the circuit board 112 and has at least one light-emitting element 1221. The light-emitting part 122 receives, from the circuit board 112, the light control signal (LS) configured to control at least one light-emitting element 1221.

In an embodiment, the first connection interface, 111, can be any conventional interface. For example, the first connection interface 111 can be a High Definition Multimedia Interface (HDMI), a DisplayPort (DP), or a Universal Serial Bus (USB). The pin set (111-PIN) of the first connection interface 111 is arranged on the first setting pad 1121 of the circuit board 112 through soldering or other means for mounting pins to a circuit board. The transmission cable 120 can also be installed on the second installation pad 1122 of the circuit board 112 through conventional installation methods such as welding and coupled to the first connection interface 111 through the preset conductor line 1123 on the circuit board 112.

In an embodiment, the electric transmission part 121 of the transmission cable 120 can be composed of multiple core wires corresponding to the first connection interface 111 type. The numerous core wires of the electric transmission part 121 are coupled to at least a portion of the pin set (111-PIN) of the first connection interface 111 through the circuit board 112. For example, if the first connection interface 111 is HDMI, the electric transmission part 121 may be a stranded wire pair configured to transmit a differential signal and be connected to the differential signal pins of HDMI (i.e., the first connection interface 111) through the circuit board 112. The differential signal or the image signal of the first connection interface 111 is transmitted from the first end (E1) to the second end (E2) through the electric transmission part 121 of the transmission cable 120. It should be noted that the interface type for connecting with the second end (E2) of the transmission cable 120 is not limited to the first end (E1). For example, the second end (E2) and the first end (E1) of the transmission cable 120 may be connected to the same or a different interface.

In an embodiment, the light-emitting part 122 comprises one or more light-emitting elements 1221 with a series/shunt circuit. For example, the light-emitting part 122 can be an LED light strip formed by connecting light-emitting elements 1221, such as light-emitting diodes in series. The light-emitting part 122 is coupled to the circuit board 112 and receives the light control signal (LS) from the circuit board 112. For example, the light control signal (LS) provided by circuit board 112 is configured to control the brightness (i.e., amplitude), the flashing (e.g., frequency), or another mode of the light-emitting element 1221 of the light-emitting part 122.

It should be noted that the present invention is not limited by the source of the light control signal (LS) or the means for receiving the light control signal (LS). More specifically, in the embodiment shown in FIG. 2, the connector 110 further includes the light control interface 113 coupled to circuit board 112. The light control interface 113 is connected to the central part of the connector 110 through the extending cable 114 and coupled to the circuit board 112 via at least one conductor line 1141 of the extending cable 114. The light control signal (LS) is provided from the light control interface 113 to the light-emitting part 122 via the circuit board 112. In the embodiment, due to the light control interface 113 is connected to the connector 110 through the extending cable 114, the extending cable 114 makes the light control interface 113 extendable. Therefore, the light control interface 113 can be installed on a device different from the device for installing the first connection interface 111 or an interface away from the first connection interface 111. By extending cable 114, the light control interface 113 setting is more flexible and is not limited by the relative distance between the first connection interface 111 and other interfaces.

With the setting of the light control interface 113 configured to receive the light control signal (LS), it allows for the reception of the light control signal (LS) from any light control signal source without being limited to the same device as the first connection interface 111. In other words, the light control signal source can be a device connected to the first connection interface 111 or other devices. For example, the light control interface 113 can be coupled to any light-emitting element control circuit or light control signal source (such as a computer motherboard). By directly providing, from any light control signal source, the light control signal (LS) to the light-emitting part 122 through the light control interface 113, the light-emitting part 122 can be controlled without affecting the functionality of the first connection interface 111. In an embodiment, if the power required for driving the light-emitting part 122 is high, the additional light control signal source providing the light control signal (LS) can also be configured to provide the power for driving the light-emitting part 122.

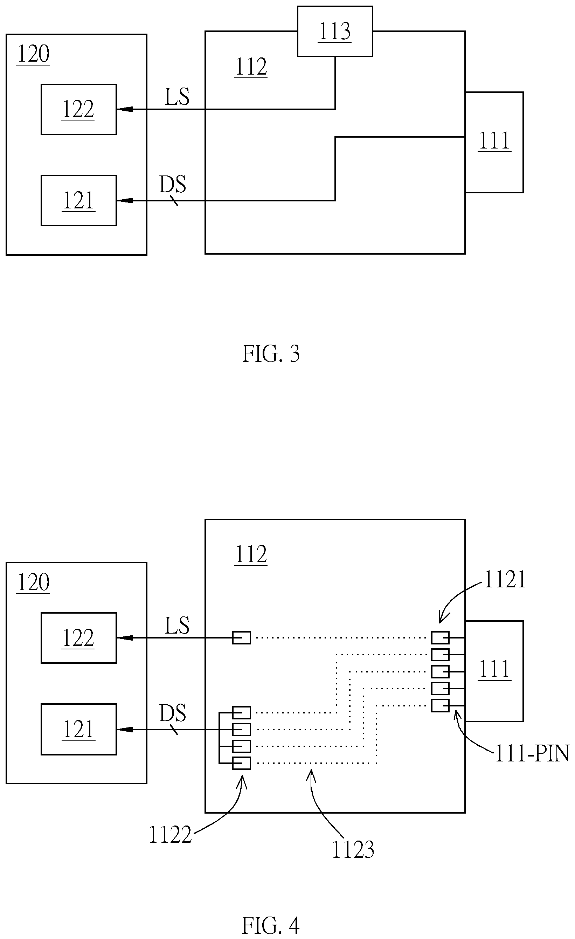

In an embodiment, the light control interface 113 is not limited to be extended from the connector 110 through the extending cable 114. Referring to FIG. 3, the light control interface 113 is directly arranged at the main part of the connector 110. For example, the light control interface 113 is placed at the connector in a socket or a plug. More specifically, the light control interface 113, for example, is an ARGB socket coupled to a light control signal source through a wire(s). On the other hand, the light control interface 113 can also be a plug of any interface, configured to plug into any light control signal source. In the embodiment, if the light control interface 113 is a plug, arranging with the first connection interface 111 side by side is preferable to allow the light control interface 113 to be connected to the same device as the first connection interface 111. In the embodiment, the light control interface 113 can be coupled to the light control signal source, for example, through a transmission line, but not limited to. In the embodiment, the light control interface can use standard connection interfaces to be compatible with more common light control signal sources. For example, the light control interface can be selected from USB or ARGB.

In an embodiment, the light control signal (LS) may be received by the first connection interface 111. For example, in FIG. 4, the light control signal (LS) is provided by the device connected with the first connection interface 111 and received by the first connection interface 111. More specifically, the first connection interface, 111, may be connected to an HDMI port of a computer (such as but not limited to). The HDMI port of the computer provides the light control signal (LS) to the light-emitting part 122 through the ground pin, power pin, or low-frequency pin of the first connection interface 111 that is not used for transmitting differential signals (i.e., the data signal (DS)). Accordingly, the device connected with the first connection interface, 111, will directly control the light-emitting element 1221 by providing the light control signal (LS) to the light-emitting part 122.

Regarding the luminous effect, the light emitted by the light-emitting element 1221 corresponds to at least one wavelength or spectrum. It should be noted that the light emitted by the light-emitting element 1221 is composed of a certain range of bands with the wavelength as the peak. In other words, the light-emitting element 1221 may be configured to provide light with at least one color. For example, the light-emitting element 1221 may have a plurality of light units that emit a first color light (e.g., red light), a second color light (e.g., blue light), and/or other color light. The control of the plurality of light units may be, for example, achieved by providing a plurality of light control signals corresponding to the plurality of light units through the connector 110. On the other hand, the light-emitting element 1221 may be configured to emit white light by a single white light unit or a plurality of light units configured to compose white light. More specifically, the light-emitting element 1221 may have a first light unit, a second light unit, and a third light unit corresponding to the three primary colors, but not limited to. The light control signals can also be configured to control the first, second, and third light units to provide lights with an adjustable color. Therefore, the light-emitting element 1221 provides a luminous effect for the user.

In addition to the luminous effect, lights with different colors can represent different transmission line devices with 100 statuses. For example, a red light may be described as an abnormal connection, while a blue or a green light may be defined as a standard connection or a standby mode, but not limited to. On the other hand, in addition to using different colored lights for differentiation, parameters such as emission frequency and brightness can also be used as status indicators to indicate the status of the transmission line device 100. For example, the user can be informed whether the transmission line device 100 is set in a transmission mode, a standby mode, or other statuses in a breathing light mode or a flashing mode. In other words, the light control signal is configured to control a luminescence spectrum, a luminescence frequency, a brightness, or a combination thereof of the light-emitting part.

Compared to the prior arts that used light guide strips that emit light depending on the light source set on the connector, the light-emitting element 1221 provides different visual effects or different indicators for the transmission line device 100 through the changes of the luminescence spectrum, the luminescence frequency, the brightness, or combination thereof.

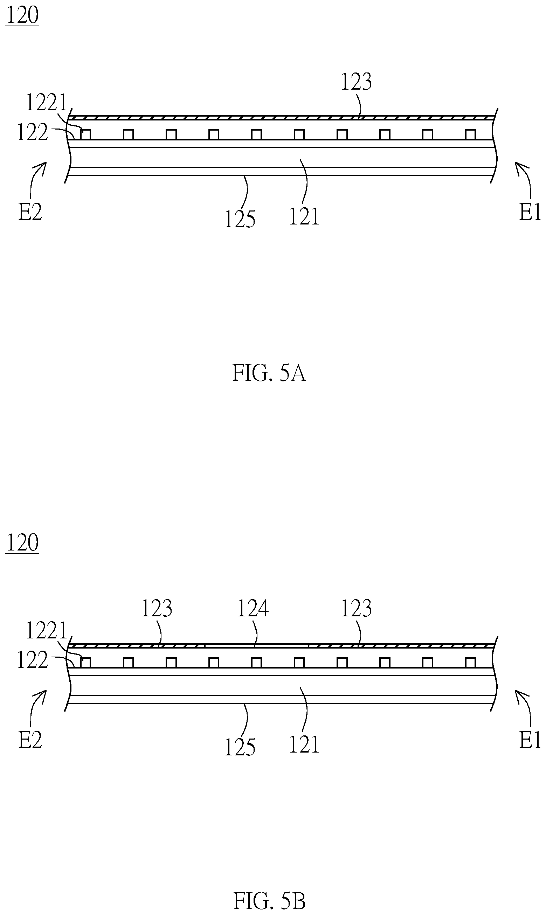

The light-emitting part 122 of transmission cable 120 can be arranged between the first (E1) and the second (E2) transmission cable 120. In an embodiment, the transmission cable 120 may have at least one transparent section corresponding to the light-emitting part 122. For example, referring to FIG. 5A, the light-emitting part 122 can be extended from the first end (E1) to the second end (E2), and the light-emitting element 1221 of the light-emitting part 122 can be distributed between the first end (E1) and the second end (E2) of the transmission cable 120. Moreover, the transmission cable 120 has a transparent section 123, which corresponds to the light-emitting part 122, in the example of FIG. 5A, the transparent section 123 is continuously extended from the first end (E1) to the second end (E2) of the transmission cable 120 so that the light can be constantly emitted between the first end (E1) and the second end (E2) of the transmission cable 120. In an embodiment, the light can be emitted discretely. Referring to Figure 5B, the transmission cable 120 may have at least one transparent section 123 and at least one opaque section 124. At least one transparent section 123 and at least one opaque section 124 are arranged intermittently between the first (E1) and the second (E2) of the transmission cable 120, making the light emitted discretely. At least one opaque section 124 may be used to prevent the light from being emitted to an undesired position and to make the lighting arrangement more flexible but not limited to.

In the embodiment, the transparent section 123 and the opaque section 124 can be adjusted through the barrier layer 125 of the transmission cable 120. The barrier layer 125 can be composed of plastic, rubber, or any insulating material. The barrier layer 125 is set with a transparent material that allows the transparent section 123 to transmit light. The opaque material can set the opaque section 124 in the barrier layer 125. The barrier layer 125 of the transmission cable 120 is composed of a composite of transparent and opaque materials to achieve the technology of making the transmission cable 120 have at least one transparent section 123, but not limited to this.

For the light control interface application, the light control interface is coupled to an electrical device that provides a light control signal, and the light control signal corresponds to the status information of the electrical device. Precisely, as an electrical device that serves as a light control signal source, such as a computer, a set-top box, or other signal output device. The light control signal provided by an electrical device represents the current status of the electrical device, such as startup, standby, sleep, or other status or modes. Taking a computer as an example, the light control interface can be coupled to the interface that can provide the light control signal (LS) (such as an ARGB port on the mainboard of the computer). The ARGB port of the mainboard can be controlled by the operating system, a program, or firmware installed in the computer, which modulates for outputting the light control signal (LS) from the ARGB port. The light control signal (LS) provided by the computer may include at least one status information of the computer. The parameters, such as the emission spectrum, the emission frequency, and brightness of light-emitting part 122, may be adjusted through the light control signal (LS) based on at least one status information of the computer. For example, a breathing light mode or a flashing mode can inform a user whether the computer is in transmission mode, standby mode, or other modes, but it is not limited to. In the embodiment, the first connection interface, 111, can also be coupled to a corresponding interface of the electrical device (e.g., the computer PC), providing the light control signal (LS) to receive at least one electrical signal (DS). The status information includes the status of the electrical device transmitting at least one electrical signal (DS). For example, taking an HDMI interface of a computer as an example, at least one electrical signal (DS) is a pair of differential signals corresponding to the image signal. When at least one electrical signal (DS) is transmitted, at least one of the parameters of the emission spectrum, emission frequency, and brightness of the light-emitting part 122 can be adjusted through the light control signal (LS) to let the user know the transmission status of the at least one electrical signal (DS).

A second embodiment of the present invention provides a luminous transmission line system. The luminous transmission line system includes an electrical device and a transmission cable detachably connected to the electrical device. The electrical device includes a second connection interface configured to provide at least one electrical signal and a light control signal source configured to provide a light control signal. The transmission line device includes a connector, and a transmission cable connected to the connector with the first end of the transmission cable. The connector consists of a first connection interface coupled to the second connection interface, a light control interface connected to the light control signal source, and a circuit board connected to the first connection interface and the light control interface. The transmission cable includes an electric transmission part coupled to the first connection interface through the circuit board and configured to transmit at least one electrical signal from the first connection interface to a second end of the transmission cable and a light-emitting part coupled to the circuit board and having at least one light-emitting element; wherein the light-emitting part receives, from the circuit board, a light control signal configured to control the at least one light-emitting element.

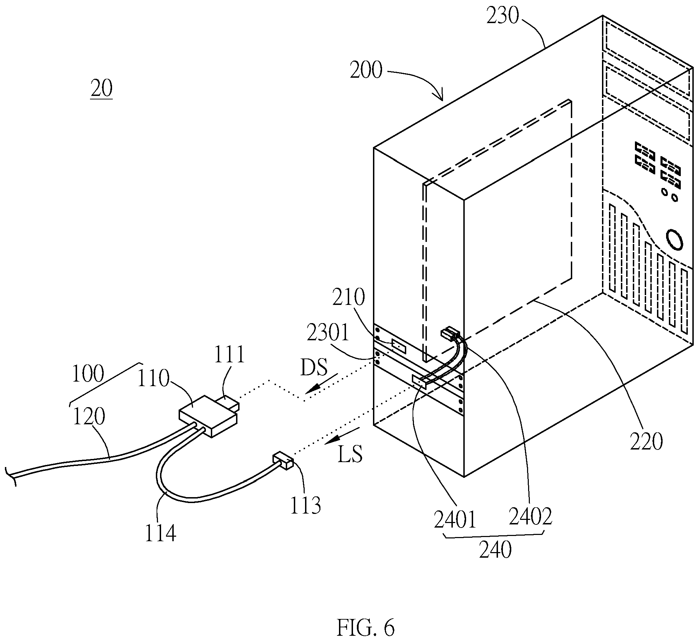

Specifically, referring to FIG. 6, the luminous transmission line system 20 includes the electrical device 200 and the transmission line device 100. The electrical device 200 consists of the second connection interface 210 and the light control signal source 220. The transmission line device 100 consists of the connector 110 and the transmission cable 120. The connector 110 comprises the first connection interface 111, the light control interface 113, and the circuit board 112. The first end (E1) of the transmission cable 120 is connected to the connector 110. The transmission cable 120 includes the electric transmission part 121 and the light-emitting part 122. The electric transmission part 122 is coupled to the first connection interface 111 through the circuit board 112 and configured to transmit at least one electrical signal (DS) to the second end (E2) of the transmission cable 120. The light-emitting part 122 is coupled to the light control interface 113 through the circuit board 112 and has at least one light-emitting element 1221. The light-emitting part 122 receives the light control signal (LS) from the circuit board 112 to control at least one light-emitting element 1221.

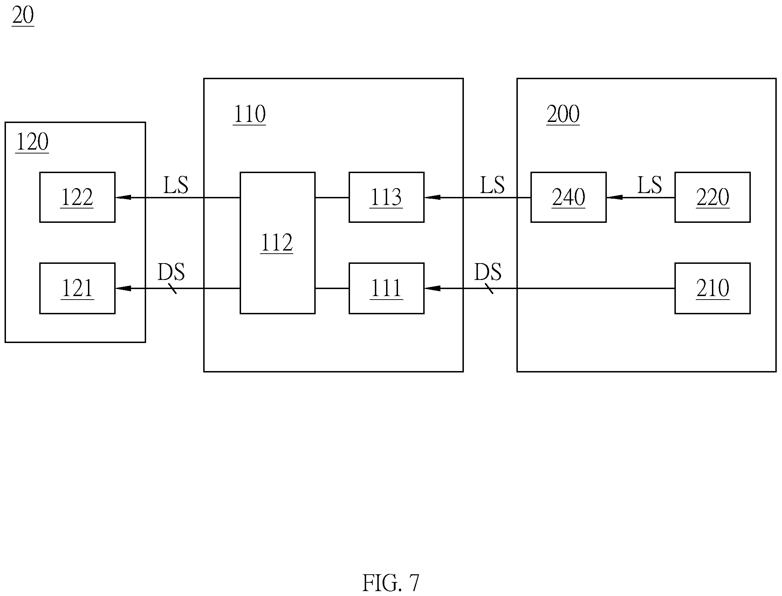

Specifically, the electrical device 200 can be a signal output device such as a computer or a set-top box. For example, the light control signal source 220 is one of a mainboard, a display card, or a power supply of the electrical device 200. Taking the computer shown in Figure 7 as an example, the computer 200 has a second connection interface of 210 (e.g., an HDMI socket) and a light control signal source of 220 (e.g., a mainboard). The first connection interface 111 (e.g., HDMI plug) of the transmission line device 100 corresponding to the second connection interface 210 is detachably inserted into the second connection interface 210. On the other hand, the light control interface 113 of the transmission line device 100 is configured to correspond to the light control signal source 220. For example, if the light control signal source 220 is a mainboard, the light control signal (LS) can be output from the ARGB port of the mainboard. It should be noted that the present invention is not limited to setting the light control interface 113 into the light control signal source 220. In addition, the light-emitting part 122 receives the light control signal (LS) and performs the luminous effects described in the first specific embodiment.

The light control interface 113 can be coupled to the light control signal source 220 by any means. For example, as shown in FIG. 6, the light control signal source 220 can be extended to case 230 of the electrical device 200 through the light control signal extension interface 240. The light control signal extension interface 240 includes a light control output interface 2401 and a light control signal transmission line 2402 coupled between the light control output interface 2401 and the light control signal source 220. The light control signal (LS) provided by the light control signal source 240 is transmitted to the light control output interface 2401 via the light control signal transmission line 2402. The light control output interface 2401 is arranged on case 230, accommodating the light control signal source 220. Specifically, the light control signal (LS) is provided from the light control signal source 220 inside case 230 through the light control signal transmission line 2402 to the light control output interface 2401 located on case 230. The light control output interface 2401 type corresponds to the light control interface 113. For example, if the light control output interface 2401 is an ARGB or USB socket, then the light control interface 113 can be an ARGB or USB plug corresponding to the light control output interface 2401 but is not limited to this. It should be noted that the light control output interface 2401 only needs to correspond to the light control interface 113 and does not need to correspond to the light control signal source 220. For example, if the light control signal (LS) of the light control signal source 220 is an output from the ARGB port, then one end of the light control signal transmission line 2402 corresponds to the ARGB port. The other end may be a USB interface or others, such as the light control interface 113, but it is not limited to this. It should be noted that the light control interface 113, shown in FIG. 6, is connected to the connector 110 through the extending cable 114. However, the setting of light control interface 113 is not limited to this. In other words, light control interface 113 can also be set on connector 110 and connected to light control output interface 2401 through a signal line.

In an embodiment, the light control output interface 2401 is arranged on case 230 through a blanking plate. For example, the light control output interface 2401 can be integrated with a blanking plate 2301 (e.g., a PCIE plate of a computer) detachably arranged on case 230 of the electrical device 200. By using blanking plate 2301, it is possible to avoid damaging the integrity and affecting the dustproof or waterproofing of case 230.

Extending the light control output interface 2401 to case 230 improves the convenience and reliability of the connection between the light control output interface 2401 and the light control interface 113. Moreover, the interface selection of light control interface 113 will not be limited by the light control signal source 220. For example, if the light control signal source 220 only provides an ARGB port, the light control signal source 220 can be configured to convert to a desired interface (e.g., USB interface) from the ARGB port by the light control output interface 2401. Therefore, the light control signal extension interface 240 provides an extension interface from the inside of the case to the surface of the case.

However, the mean for connecting the light control interface 113 to the light control signal source 220 is not limited to the embodiment shown in FIG. 6. The light control interface 113 can be directly coupled to the light control signal source 220. As shown in FIG. 7, the light control interface 113 is directly coupled to the light control signal source 220 through the light control signal line 2201. Specifically, case 230 can be equipped with holes or partially removed a baffle/ blanking plate that extends the light control signal line 2201 to the outside of case 230. Two ends of the light control signal line 2201 can be configured with interfaces corresponding to light control interface 113 and light control signal source 220, respectively.

The luminescent transmission line system can effectively be integrated with the electrical device and the transmission line device. Moreover, the electrical device provides a light control signal to the light-emitting part through the light control interface of the transmission line device. Thereby, the electrical device controls the light-emitting element. The luminescent transmission line system causes the light-emitting part of the transmission line device to provide various types of luminescent states.

The foregoing disclosure is merely preferred embodiments of the present invention and is not intended to limit the claims of the present invention. Any equivalent technical variation of the present invention's description and drawings shall be within the scope of the claims of the present invention.

## Claims

1. A transmission line device (100), comprising:
a connector (110) including:
a first connection interface (111); and
a circuit board (112) coupled to the first connection interface (111); and
a transmission cable (120) connected to the connector (110) with a first end (E1) of the transmission cable (120), including:
an electric transmission part (121) coupled to the first connection interface (111) through the circuit board (112) and configured to transmit at least one electrical signal (DS) from the first connection interface (111) to a second end (E2) of the transmission cable (120); and
a light-emitting part (122) coupled to the circuit board (112) and having at least one light-emitting element (1221); wherein the light-emitting part (122) receives, from the circuit board (112), a light control signal (LS) configured to control the at least one light-emitting element (1221).

2. The transmission line device (100) of claim 1, wherein the connector (110) further includes a light control interface (113) coupled to the circuit board (112); and wherein the light control signal (LS) is provided to the light-emitting part (122) from the light control interface (113) through the circuit board (112).

3. The transmission line device (100) of claim 2, wherein the light control interface (113) is connected to a main part of the connector (110) through an extending cable (114).

4. The transmission line device (100) of claim 2, wherein the light control interface (113) is configured to connect an electrical device (200) providing the light control signal (LS); and wherein the light control signal (LS) corresponds to a status information of the electrical device (200).

5. The transmission line device (100) of claim 4, wherein the first connection interface (111) is configured to connect to the electrical device (200) and receive the at least one electrical signal (DS); and wherein the status information includes a status for the electrical device (200) transmitting the at least one electrical signal (DS).

6. The transmission line device (100) of claim 1, wherein the light control signal (LS) is configured to control a luminescence spectrum, a luminescence frequency, a brightness, or a combination thereof of the light-emitting part (122).

7. A luminous transmission line system (20), comprising:
an electrical device (200) including:
a second connection interface (210) configured to provide at least one electrical signal (DS); and
a light control signal (LS) source configured to provide a light control signal (LS);
a transmission line device (100) detachably connected to the electrical device (200), including:
a connector (110) including:
a first connection interface (111) coupled to the second connection interface (210);
a light control interface (113) coupled to the light control signal (LS) source; and
a circuit board (112) coupled to the first connection interface (111) and the light control interface (113); and
a transmission cable (120) connected to the connector (110) with a first end (E1) of the transmission cable (120), including:
an electric transmission part (121) coupled to the first connection interface (111) through the circuit board (112) and configured to configured to transmit at least one electrical signal (DS) from the first connection interface (111) to a second end (E2) of the transmission cable (120); and
a light-emitting part (122) coupled to the circuit board (112) and having at least one light-emitting element (1221); wherein the light-emitting part (122) receives, from the circuit board (112), a light control signal (LS) configured to control the at least one light-emitting element (1221).

8. The luminous transmission line system (20) of claim 7, wherein the light control interface (113) is connected to a main part of the connector (110) through an extending cable (114).

9. The luminous transmission line system (20) of claim 7, wherein the light control signal (LS) corresponds to a status information of the electrical device (200).

10. The luminous transmission line system (20) of claim 9, wherein the status information includes a status for the electrical device (200) transmitting the at least one electrical signal (DS).

11. The luminous transmission line system (20) of claim 7, wherein the light control signal (LS) is configured to control a luminescence spectrum, a luminescence frequency, a brightness, or a combination thereof of the light-emitting part (122).

12. The luminous transmission line system (20) of claim 7, wherein the electrical device (200) further includes a light control output interface (2401) arranged on a case of the electrical device (200) and coupled to the light control signal (LS) source.

13. The luminous transmission line system (20) of claim 7, wherein the light control signal (LS) source is selected from a mainboard, display board or power supply of the electrical device (200).

14. Alight control signal (LS) extending interface, comprising:
a light control output interface (2401); and
a light control signal (LS) transmission line coupled between the light control output interface (2401) and a light control signal (LS) source;
wherein a light control signal (LS) provided by the light control signal (LS) source is provided to the light control output interface (2401) through the light control signal (LS) transmission line; and
wherein the light control output interface (2401) is arranged at a case configured to accommodate the light control signal (LS) source.

15. The light control signal (LS) extending interface of claim 14, wherein the light control output interface (2401) is integrated with a blanking plate (2301) and arranged at the case through the blanking plate (2301).
